(19) Europäisches Patentamt
European Patent Office
Office européen des brevets

(11) EP 0 527 653 B1

(12) **EUROPEAN PATENT SPECIFICATION**

(45) Date of publication and mention
of the grant of the patent:
**22.04.1998 Bulletin 1998/17**

(51) Int Cl.⁶: **G02F 1/37**

(21) Application number: **92307421.5**

(22) Date of filing: **13.08.1992**

(54) **Fiber type wavelength converter**

Wellenlängen-Konverter vom Fasertyp

Convertisseur de longuer d'onde à fibre

(84) Designated Contracting States:
**DE FR GB NL**

(30) Priority: **14.08.1991 JP 204422/91**

(43) Date of publication of application:
**17.02.1993 Bulletin 1993/07**

(73) Proprietor: **PIONEER ELECTRONIC CORPORATION**
**Meguro-ku Tokyo 153 (JP)**

(72) Inventors:
• **Chikuma, Kiyofumi**
**Tsurugashima-shi, Saitama 350-02 (JP)**
• **Okamoto, Sota**
**Tsurugashima-shi, Saitama 350-02 (JP)**

(74) Representative: **Tomlinson, Kerry John et al**
**Frank B. Dehn & Co.,**
**European Patent Attorneys,**
**179 Queen Victoria Street**
**London EC4V 4EL (GB)**

(56) References cited:
EP-A- 0 299 647          EP-A- 0 430 183
GB-A- 2 235 986          US-A- 4 923 277

• JOURNAL OF APPLIED PHYSICS, vol. 67, no. 5, March 1, 1990 K. HAYATA et al. " Modal structure of the Cerenkov second-harmonic Wave in optical fibers"pages 2672-2674

## Description

The present invention relates to an optical wavelength converter, in particularly to a fiber type wavelength converter using Cerenkov radiation phase matching.

Wavelength converters have been actively developed, which use nonlinear optical crystal to constitute an optical waveguide passage to guide an optical wave to a minute area, and effectively generate a second harmonic wave. These wavelength converters are generally classified into two types depending on the method for satisfying phase matching. The first type matches the phase velocity of a nonlinear polarization wave excited by incident light of a fundamental wave with that of the second harmonic wave, and executes the phase matching between both the guide modes of the fundamental wave and of the second harmonic wave. The other type executes so-called Cerenkov radiation phase matching, i.e., the phase matching between the guide mode of the fundamental wave and the radiation mode of the second harmonic wave.

An optical wavelength converter is known, which is constituted in the shape of an optical fiber comprising a core made of nonlinear optical crystal and a clad surrounding the core. This optical wavelength converter employs the Cerenkov radiation phase matching. This optical wavelength converter is also known as an optical fiber type second harmonic wave generator (hereinafter referred to as "SHG").

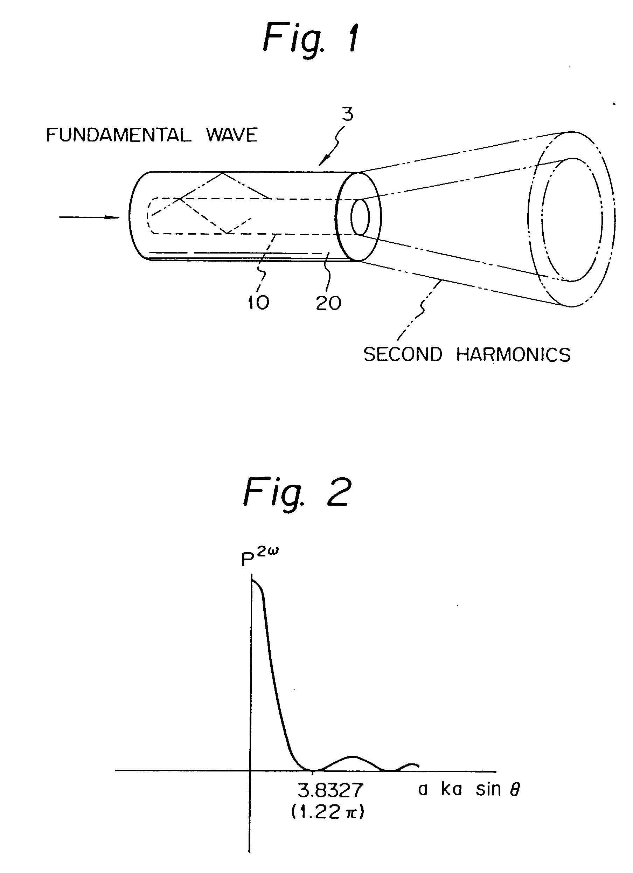

Fig. 1 is a conceptual diagram of an SHG 3, which comprises a columnar core 10 and a cylindrical clad layer 20 concentrically surrounding the core 10. When the fundamental wave propagates through the core 10 from the left to the right in the diagram, a second harmonic wave is generated. In other words, the nonlinear polarization wave propagates at the same phase velocity and generates the second harmonic waves with a predetermined angle to the clad layer. The second harmonic waves are reflected within the inside surface of the clad layer 20 and propagate from the left to the right in the diagram. The phase matching between the guide mode of the fundamental wave and the radiation mode of the second harmonic wave is executed in the clad layer and the core.

The second harmonic wave and reflected wave at the boundary between the clad layer 20 are emitted from the end of the fiber in a corn shape as shown in Fig. 1. The equiphase wave surface of the wavefront of the thus emitted second harmonic wave is conical with the center axis of the fiber as its axis.

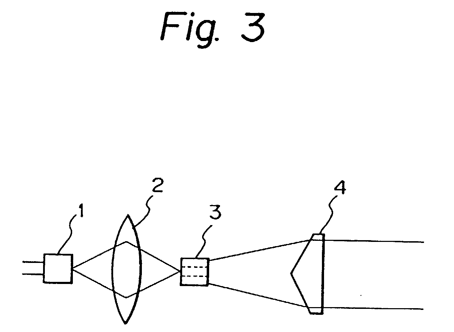

According to the Cerenkov radiation system, it is possible to generate the second harmonic wave whose optical phase is almost automatically matched. The SHG is therefore applied as a short-wave light generator. As shown in Fig. 3, the short-wave light generator comprises a semiconductor laser 1, a coupling lens 2, an SHG 3 of which core is constituted by nonlinear optical crystal, and an axicon lens 4. The coupling lens 2 collects and guides the light emitted from the semiconductor laser 1 onto the end face of the SHG 3. The axicon lens 4 shapes the wavefront of the second harmonic wave, which is emitted after conversion by the optical wavelength converter, to form the second harmonic wave in the form of parallel light.

In this way, the short-wave light generator module is constituted by the above SHG. However, the optical nonlinear material of this type which has an efficiently large nonlinear polarization constant has not yet been found. In addition, it is difficult to a material for the claddings, which surround the core, having a refractive index suitable for the core. Consequently, the wavelength converting efficiency (the output power of an emitted second harmonic wave / the output power of the semiconductor laser) is about 0.1% at maximum.

GB-A-2235986 describes a prior art fibre-type wavelength converter. The preamble to claim 1 is based on that document.

It is therefore an object of the present invention to provide a fiber type SHG which makes a sufficient use of the performance of a non-linear optical material for the core and has a high converting efficiency.

To achieve this object, there is provided a fiber type optical wavelength converter comprising an optical fiber including a core made of a nonlinear optical crystal and a clad surrounding the core, in which a fundamental wave having a wavelength $\lambda$ entering and propagating in the direction of the center axis of the core is converted into a second harmonic wave having a half wavelength $\lambda/2$, wherein said core and said clad are made of a nonlinear optical material and an optical glass satisfying the following inequality respectively:

$$\left| (n_G{}^{2\omega})^2 - (N^{\omega})^2 \right| < 0.093(\lambda/a)^2 \tag{1}$$

where $n_G{}^{2\omega}$ represents a refractive index of said core to the second harmonic wave corresponding to a dielectric tensor effectively utilized in the conversion, $N^{\omega}$ represents an effective refractive index of the optical fiber, $\lambda$ represents the wavelength of the fundamental wave and $\underline{a}$ represents the radius of said core in the cross-section in such a manner that the core radius satisfies inequality 1; and characterized in that:

the output power $P^{2\omega}$ of said second harmonic wave is defined by the following equation 11

$$P^{2\omega} = 4\pi^2\omega^3\mu_0\varepsilon_0{}^2 d^2 C^2 LG(2\beta)F(2\beta) \tag{11}$$

where

$\omega$ denotes the angular frequency of the fundamental wave;
$\mu_0$ denotes the permeability of vacuum;
$\varepsilon_0$ denotes the dielectric constant of vacuum;
$\underline{d}$ denotes a constant of a nonlinear polarization tensor effectively utilized in the wavelength conversion;
$\underline{C}$ denotes a constant number based on the fundamental wave;
$G(2\beta)$ denotes a factor influencing an interface reflection that the second harmonic wave undergoes at the boundary between the core and clad due to a refractive index difference therebetween which corresponds to a Fresnel coefficient of transmittance and is defined by the following equation 10

$$G(\kappa) = Real\left\{ -i\,\frac{\eta N_0(a\gamma)H_1{}^{(1)}(a\eta) - \zeta(N_1(a\gamma)H_0{}^{(1)}(a\eta)}{J_0(a\gamma)H_1{}^{(1)}(a\eta) - \eta J_1(a\gamma)H_0{}^{(1)}(a\eta)} \right\} \tag{10}$$

$$\Upsilon = (4\omega^2\mu_0\varepsilon_G{}^{2\omega} - \kappa^2)^{1/2}$$

$$\eta = (4\omega^2\mu_0\varepsilon_S{}^{2\omega} - \kappa^2)^{1/2}$$

where

$\varepsilon_G{}^{2\omega}$ denotes a dielectric constant of the core with respect to the second harmonic wave;
$\varepsilon_S{}^{2\omega}$ denotes a dielectric constant of the clad with respect to the second harmonic wave;
$N_0$ and $N_1$ denote the zeroth and the first Neumann functions respectively;
$J_1$ and $J_0$ denote the first and the zeroth Bessel functions of the first kind respectively; and
$H_1$ and $H_0$ denote the first and the zeroth deformation Hankel functions respectively;

$F(2\beta)$ denotes a factor influencing a so-called overlap integral between the distribution of a nonlinear polarization and an electric field;
$\beta$ denotes a propagation constant of the fundamental wave propagating in the fiber; and
$\underline{L}$ denotes the length of core crystal;

and in that said wavelength $\lambda$ is a selected wavelength of the fundamental wave corresponding to a value of the factor $G(2\beta)$ within the full width at half maximum of one peak of a curve of said factor $G(2\beta)$ including a plurality of peaks in a contour map prepared on the basis of the following equations 19 and 20

$$\zeta^2|_{K=2\beta} = (2k)^2((n_G{}^{2\omega})^2 - (N^\omega)^2) \tag{19}$$

$$\eta^2|_{K=2\beta} = (2k)^2((n_S{}^{2\omega})^2 - (N^\omega)^2) \tag{20}$$

in which the abscissa indicates an increasing ratio of the refractive index of the core with respect to the second harmonic wave from the effective refractive index of the optical fiber $(n_G{}^{2\omega})^2 - (N^\omega)^2$, and the ordinate indicates an increasing ratio of the refractive index of the clad with respect to the second harmonic wave from the effective refractive index of the optical fiber $(n_S{}^{2\omega})^2 - (N^\omega)^2$, the curves being plotted along the equivalent values of $G(2\beta)$ in the plane containing the two coordinate axes, such that the direction indicating the high value of $G(2\beta)$ corresponds to a vertical direction to such a plane.

In a preferred embodiment, the effective refractive index of the fiber is the root of the following characteristic equation 4:

$$UJ_1(U)/J_0(U) = WK_1(W)/K_0(W) \tag{4}$$

$$U = k_0 a[(n_G^\omega)^2 - (N^\omega)^2]^{1/2}$$

$$W = k_0 a[(N^\omega)^2 - (n_S)^2]^{1/2}$$

where

$J_1$ and $J_0$ denote the first and the zeroth Bessel functions of the first kind respectively;
$K_1$ and $K_0$ denote the first and the zeroth deformation Hankel functions respectively;
$n_G^\omega$ represents the refractive index of the core with respect to the fundamental wave;
$n_S^\omega$ represents the refractive index of the clad with respect to the fundamental wave; and
$k_0$ denotes the propagation constant $2\pi/\lambda$ in vacuum.

Said constant number based on the fundamental wave $\underline{C}$ may be approximated by the following formula 3:

$$C \cong \frac{2(\mu_0/\varepsilon_0)^{1/2} W^2 P^\omega}{\pi a^2 N^\omega (U^2 + W^2)} \tag{3}$$

where

$\underline{a}$ denotes the core radius;
$N^\omega$ denotes an effective refractive index in an $LP_{0l}$ mode for propagating a fundamental wave with the propagation constant $\beta$ in the fiber; and
$P^\omega$ denotes the power of the fundamental wave.

According to the selection of core materials, the wavelength of the fundamental wave, the radius of the core and clad materials satisfying the above inequality 1, the fiber type optical wavelength converter easily converts the fundamental wave into the second harmonic wave of half wavelength at a high efficiency.

A preferred embodiment of the present invention will now be described by way of example only and with reference to the accompanying drawings, in which:

Fig. 1 is an enlarged perspective view of a fiber type optical wavelength converter;
Fig. 2 is a graph showing a power property curve in the fiber type optical wavelength converter according to the present invention;
Fig. 3 is a schematic diagram of a short-wave light generator using an SHG;
Fig. 4 is graph showing the G(2β) property curve depending on the wavelength of the fundamental wave in an SHG; and
Fig. 5 is a graph showing the conversion efficiency with respect to the wavelength of the fundamental wave.

The structure of an SHG according to the present invention is approximately the same as the one illustrated in Fig. 1. The SHG is an optical fiber comprising a columnar core made of nonlinear optical crystal, and a cylindrical clad layer made of optical glass enclosing the core concentrically. The SHG has a characteristic that the optical fiber has an effective refractive index $N^\omega$ satisfying the following inequality

$$\left| (n_G^{2\omega})^2 - (N^\omega)^2 \right| < 0.093(\lambda/a)^2 \tag{1}$$

wherein $n_G^{2\omega}$ represents a refractive index of the core to the second harmonic wave corresponding to an SHG tensor

4

effectively utilized in the conversion, $\lambda$ represents a wavelength of the fundamental wave and $\underline{a}$ represents a radius of the core in the cross-section. The effective refractive index $N^{\omega}$ is determined by both the indexes of the core and clad and the core radius as described hereinafter. The SHG tensor is a tensor quantity of a second nonlinear optical constant $d_{ijk}$ expressed as a three degree determinant, for example, a 3 x 6 determinant $d_{il}$:

$$\begin{bmatrix} d_{11} & d_{12} & d_{13} & d_{14} & d_{15} & d_{16} \\ d_{21} & d_{22} & d_{23} & d_{24} & d_{25} & d_{26} \\ d_{31} & d_{32} & d_{33} & d_{34} & d_{35} & d_{36} \end{bmatrix}$$

By using this determinant $d_{il}$, the relationship between a nonlinear polarization in the core $P^{NL}$ and an electric field $E^{\omega}$ of the fundamental wave can be expressed as follows:

$$\begin{bmatrix} P_x^{NL} \\ P_y^{NL} \\ P_z^{NL} \end{bmatrix} = \varepsilon_0 \begin{bmatrix} d_{11} & d_{12} & d_{13} & d_{14} & d_{15} & d_{16} \\ d_{21} & d_{22} & d_{23} & d_{24} & d_{25} & d_{26} \\ d_{31} & d_{32} & d_{33} & d_{34} & d_{35} & d_{36} \end{bmatrix} \begin{bmatrix} (E_x^{\omega})^2 \\ (E_y^{\omega})^2 \\ (E_z^{\omega})^2 \\ 2E_y^{\omega}E_z^{\omega} \\ 2E_z^{\omega}E_x^{\omega} \\ 2E_x^{\omega}E_y^{\omega} \end{bmatrix}$$

wherein $\varepsilon_0$ denotes the dielectric constant of vacuum. Therefore, both the polarization state of the fundamental wave and the orientation of the core crystal determine both the tensor components in the SHG tensor to be utilized and the polarization state of the second harmonic wave generated by the fiber type wavelength converter. Thus, $n_G^{2\omega}$ represents a refractive index of the core with respect to the second harmonic wave in such a polarization state.

The inventors have analyzed an electromagnetic field in the SHG while considering the presence of the boundary between the clad and the core with the clad diameter set finite as per the actual SHG. From the analysis, the inventors have found that for an SHG having a fiber radius and a core crystal length (SHG length) such that the second harmonic wave generated once by the core no longer comes back to the core, namely, it is fully reflected at most once by the boundary between the clad layer and air, and for another SHG having an infinite fiber radius and an endless SHG length, the outputs of both these SHGs are substantially equal to each other. In other words, inventors have found out that the output power of the SHG can be approximated by using the SHG length such that the second harmonic wave is fully reflected only once by the boundary between the clad and air, without repeating.

Therefore, the output power of the second harmonic wave generated by the SHG comprising a core and an infinite clad layer was analyzed by the following process.

Given that a fundamental wave with the propagation constant $\beta$ in $LP_{01}$ mode is propagated in an SHG, a nonlinear polarization $P^{NL}$ to be excited is defined by the following equation:

$$P^{NL} = \varepsilon_0 dCJ_0{}^2(Ur)\exp(-i2\beta z)$$

where

Z denotes a waveguide direction of the SHG;
$\varepsilon_0$ denotes the dielectric constant of vacuum;
$\underline{d}$ denotes a constant of the nonlinear polarization tensor effectively utilized in the wavelength conversion; and
$\underline{C}$ denotes a constant number based on the fundamental wave.

By using the guided power of the fundamental wave, the constant number C based on the fundamental wave may be approximated by the following formula 3:

$$C \cong \frac{2(\mu_0/\varepsilon_0)^{1/2} W^2 P^\omega}{\pi a^2 N^\omega (U^2 + W^2)} \tag{3}$$

$$U = a(\omega^2 \mu_0 \varepsilon_g^\omega - \beta^2)^{1/2}$$

$$W = a(\beta^2 - \omega^2 \mu_0 \varepsilon_s^\omega)^{1/2}$$

where

ω denotes an angular frequency of the fundamental wave;
$\underline{a}$ denotes a core radius of the SHG;
$N^\omega$ denotes an effective refractive index in $LP_{01}$ mode for the fundamental wave propagating with the propagation constant β in the fiber of the SHG;
$\mu_0$ denotes the permeability of vacuum;
$\varepsilon_g^\omega$ denotes a dielectric constant of the core with respect to the fundamental wave; and
$\varepsilon_s^\omega$ denotes a dielectric constant of the clad with respect to the fundamental wave.

The effective refractive index of the SHG fiber comprising the core and clad layer $N^\omega$ is the root of the following characteristic equation 4:

$$U J_1(U)/J_0(U) = W K_1(W)/K_0(W) \tag{4}$$

$$U = k_0 a[(n_G^\omega)^2 - (N^\omega)^2]^{1/2} = a(\omega^2 \mu_0 \varepsilon_g^\omega - \beta^2)^{1/2}$$

$$W = k_0 a[(N^\omega)^2 - (n_s^\omega)^2]^{1/2} = a(\beta^2 - \omega^2 \mu_0 \varepsilon_s^\omega)^{1/2}$$

where

$J_1$ and $J_0$ denote the first and the zeroth Bessel functions of the first kind respectively;
$K_1$ and $K_0$ denote the first and the zeroth deformation Hankel functions respectively;
$n_G^\omega$ represents a refractive index of the core with respect to the fundamental wave;
$n_s^\omega$ represents a refractive index of the clad with respect to the fundamental wave; and
$k_0$ denotes the propagation constant $2\pi/\lambda$ in vacuum.

By using Green's function $G^D(r,r')$ in consideration of the boundaries, an electric field of an second harmonic wave $E^{2\omega}(r)$ of the core is expressed as follows:

$$E^{2\omega}(r) = i2\omega^2 \mu_0 \varepsilon_0 dC \int_{-\infty}^{\infty} \int_0^a G^D(r,r') J_0(Ur')^2 r' dr' \times \frac{\sin[(2\beta - \kappa)L/2]}{(2\beta - \kappa)} \exp(-i\kappa z) d\kappa \tag{5}$$

where $\underline{L}$ denotes a length of the core crystal. Using the Green's function $G(r,r')$ over the whole space and an arbitrary function $A(\kappa)$, $G^D(r,r')$ will be given as follows:

$$G^D(r,r') = G(r,r') + A(\kappa)J_0(r\zeta)J_0(r'\zeta) \tag{6}$$

$G(r,r')$ will be expressed as follows:

$$G(r,r') = \begin{cases} H_0^{(1)}(r\varsigma)\,J_0(r'\varsigma) & (r>r') \\ H_0^{(1)}(r'\varsigma)\,J_0(r\varsigma) & (r<r') \end{cases} \qquad (7)$$

where $H_0^{\omega}$ and $J_0$ are the zeroth Hankel function of the first kind and the zeroth Bessel function respectively, and $\zeta^2 = 4\omega^2\mu_0\varepsilon_g^{\omega} - \kappa^2$.

The power of the second harmonic wave $P^{2\omega}$ is obtained by the following equation 8:

$$P^{2\omega} = 8\pi\omega^3\mu_0\varepsilon_0^2 d^2 C^2 \int_{-\infty}^{\infty} G(\kappa)\,F(\kappa)\,\frac{\sin^2[(2\beta-\kappa)L/2]}{(2\beta-\kappa)^2}\,d\kappa \qquad (8).$$

where

G(2β) denotes a factor influencing the interface reflection that the second harmonic wave reflects at the boundary between the core and clad due to a refractive index difference therebetween, which corresponds to a Fresnel coefficient of transmittance; and

F(2β) denotes a factor influencing a so-called overlap integral between both distributions of a nonlinear polarization and an electric field.

The factor G(2β) can be defined with the boundary conditions. The factors G(2β) and F(2β) are expressed by the following equations 9 and 10:

$$F(\kappa) = \left| \int_0^a J_0(r\varsigma)\,J_0(Ur)^2 r\,dr \right|^2 \qquad (9)$$

$$G(\kappa) = Real\left\{ -i\,\frac{\eta N_0(a\gamma)H_1^{(1)}(a\eta) - \zeta N_1(a\gamma)H_0^{(1)}(a\eta)}{J_0(a\gamma)H_1^{(1)}(a\eta) - \eta J_1(a\gamma)H_0^{(1)}(a\eta)} \right\} \qquad (10)$$

$$\gamma = (4\omega^2\mu_0\varepsilon_G^{2\omega} - \kappa^2)^{1/2}$$

$$\eta = (4\omega^2\mu_0\varepsilon_S^{2\omega} - \kappa^2)^{1/2}$$

where

$\varepsilon_G^{2\omega}$ denotes a dielectric constant of the core with respect to the second harmonic wave;
$\varepsilon_S^{2\omega}$ denotes a dielectric constant of the clad with respect to the second harmonic wave;
$N_0$ and $N_1$ denote the zeroth and the first Neumann functions respectively;
$J_1$ and $J_0$ denote the first and the zeroth Bessel functions of the first kind respectively; and
$H_1$ and $H_0$ denote the first and the zeroth deformation Hankel functions respectively.

Since the term $\sin^2[(2\beta-\kappa)L/2]/(2\beta-\kappa)^2$ in equation 8 may be approximated by Dirac delta function $\pi L\delta(2\beta-\kappa)/2$, the output power of the second harmonic wave $P^{2\omega}$ is obtained as the following equation (11).

$$P^{2\omega} = 4\pi^2\omega^3\mu_0\varepsilon_0^2 d^2 C^2 L\,G(2\beta)F(2\beta) \qquad (11)$$

As can be seen from this equation 11, the output power of the second harmonic wave $P^{2\omega}$ is influenced by these factors G(2β) and F(2β).

Since the power of the second harmonic wave is greatly influenced by the factor $F(2\beta)$ in equation 11, the value of $F(2\beta)$ should be considered in order to obtain conditions for a high conversion efficiency. Namely, it is understood that the power of the second harmonic wave increases as the value of the following integral, a so-called overlap integral, increases.

$$F(2\beta) = \left| \int_0^a J_0(r\varsigma) J_0(Ur)^2 r dr \right|^2 \qquad (12)$$

Since the term $J_0(Ur)^2$ in the overlap integral indicates a function that an electric field of the waveguided fundamental wave is distributed in the core, it hardly changes with respect to $\underline{r}$. Therefore, given that $J_0(Ur)^2 = 1$, then the overlap integral is calculated as follows:

$$F(2\beta) = (a^4/4)[2J_1(a\gamma)/(a\gamma)]^2 \qquad (13).$$

The formation of this integral value with respect to $a\gamma$ indicates a pattern similar to a diffraction image generated from a circular aperture irradiated by light having the maximum fringe at $\gamma = 1$. This integral value has a first lobe with the maximum area within $a\gamma < 3.833$ which is greater than that of the other lobe areas. $\gamma^2$ is expressed by

$$\gamma^2 = (4\pi/\lambda)^2[(n_G^{2\omega})^2 - (N^\omega)^2] \qquad (13a).$$

In other words, by considering an angle of Cerenkov radiation direction, the power of the second harmonic wave $P^{2\omega}$ will be expressed by the following approximation equation 14:

$$P^{2\omega} \propto \left| \int_0^a J_0(r\varsigma) J_0(Ur)^2 r dr \right|^2$$
$$\cong \frac{a^4}{4}\left[ \frac{2J_1(ak_G\sin\theta)}{ak_G\sin\theta} \right]^2 \qquad (14)$$

where $\theta$ represents an angle of Cerenkov radiation, $k_G$ represents a normalization frequency expressed by the following equation:

$$k_G = 4\pi n_G^{2\omega}/\lambda, \qquad (15)$$

$n_G^{2\omega}$ represents a refractive index of the core to the second harmonic wave and $\lambda$ represents a wavelength of fundamental wave. On the basis of the above approximation equation 14, the power of the second harmonic wave $P^{2\omega}$ will be expressed by such a graph as shown in Fig. 2. It will be understood that the second harmonic wave radiates from the SHG as diffraction light components in the Cerenkov radiation direction within the diffracted light having the amplitude distribution $J_0(Ur)^2$. The power distribution of the second harmonic wave appears as the Airy pattern. In other words, equation 14 implies that the wavelength converter irradiates only light diffracted in the direction of the Cerenkov radiation angle out of all the diffracted light generated from a circular aperture irradiated by light having the amplitude distribution $J_0(Ur)^2$. Therefore, it is necessary that the Cerenkov radiation angle exist in the main lobe of the diffracted image to obtain a high conversion efficiency.

As apparent from Fig. 2, the main or most power intensity $P^{2\omega}$ is obtained within from the peak to the first trough (from 0 to 3.8327 on the $ak_G\sin\theta$ axis) in the property curve of the power of the second harmonic wave. Therefore the angle of Cerenkov radiation $\theta$ in the range satisfying the following inequality

$$\sin\theta < 3.8327/ak_G \qquad (16)$$

preferably suffices a requirement to obtain the main power of the second harmonic wave. The effective refractive index

$N^\omega$ in the core extending direction is expressed by the following equation

$$N^\omega = n_G{}^{2\omega}\cos\theta \qquad (17).$$

Using the equations 13a and 17, the relationship between the refractive indexes, the wavelength of the fundamental wave and the core radius is expressed by the following inequality

$$(n_G{}^{2\omega})^2 - (N^\omega)^2 < 0.093(\lambda/a)^2 \qquad (18).$$

Since effective refractive index in the waveguide mode to the fundamental wave is therefore defined by the refractive indexes of the clad optical glass and the core material to the fundamental wave as shown in equation 4, the second harmonic wave is easily generated at a high efficiency by selecting the core materials, the wavelength of the fundamental wave, the core radius and the clad materials so as to satisfy the above inequality (1).

Furthermore, the factor G(2β) should be considered in order to obtain other conditions for a higher conversion efficiency. For this, it is preferable that the SHG suffices not only the requirement of equation 1 but also that of factor G(2β), which should be increased. The factor G(2β) comprises a function including the γ and δ, which complicatedly changes in accordance with both the refractive indexes of the core with respect to the second harmonic wave $n_G{}^{2\omega}$ and that of the clad with respect to the second harmonic wave $n_S{}^{2\omega}$ as parameters for designing of the wavelength converter. Therefore, the change of the factor G(2β) have been investigated by changing $n_G{}^{2\omega}$ and $n_S{}^{2\omega}$. The tendency of G(2β) is calculated through the following equations 19 and 20.

$$\zeta^2|_{K=2\beta} = (2k)^2((n_G^{2\omega})^2 - (N^\omega)^2) \qquad (19)$$

$$\eta^2|_{K=2\beta} = (2k)^2((n_S^{2\omega})^2 - (N^\omega)^2) \qquad (20)$$

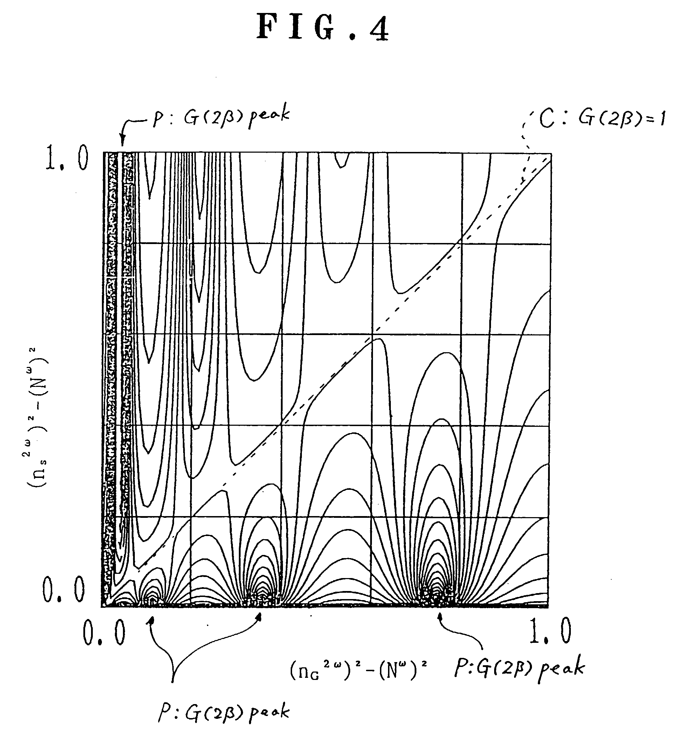

Fig. 4 shows a graph of an isarithm or contour map prepared on the basis of these equations in which the abscissa indicates an increase ratio of the refractive index of the core with respect to the second harmonic wave from the effective refractive index of the optical fiber $(n_G{}^{2\omega})^2 - (N^\omega)^2$, and the ordinate indicates an increase ratio of the refractive index of the clad with respect to the second harmonic wave from the effective refractive index of the optical fiber $(n_S{}^{2\omega})^2 - (N^\omega)^2$, the curves being plotted along the equivalent values G(2β) in the plane containing the two coordinate axes. The direction indicating the high value G(2β) corresponds to a vertical direction to such a plane. It is analyzed that, when the refractive indexes of the core and clad with respect to the second harmonic wave are equal to each other, G(2β) = 1 is obtained as shown by the dots line C of Fig 4. Particularly, it will be understood that an envelope of the curves of G(2β) in a vertical plane has a plurality of peaks, the maximum of each being marked by P in several places along the abscissa and that such peaks follows to ridges extending parallel to the ordinate, the vertical plane being parallel to the abscissa and vertical to the ordinate of the isarithm map showing the equivalent values of the factor G(2β). Namely, the G(2β) values at the peaks and ridges are greater than those at other places. The G(2β) value is sufficient within a full width at half maximum of the envelope cut out in the vertical plane so that a high conversion efficiency is obtained in the SHG. The generation of these peaks should be used for the designing of an SHG with a high conversion efficiency. Thus the SHG with a high conversion efficiency is obtained by selecting a wavelength of the fundamental wave corresponding to a value of the factor G(2β) within the full width at half maximum, preferably an adjacent value of one peak of a curve of the factor G(2β) including a plurality of peaks.

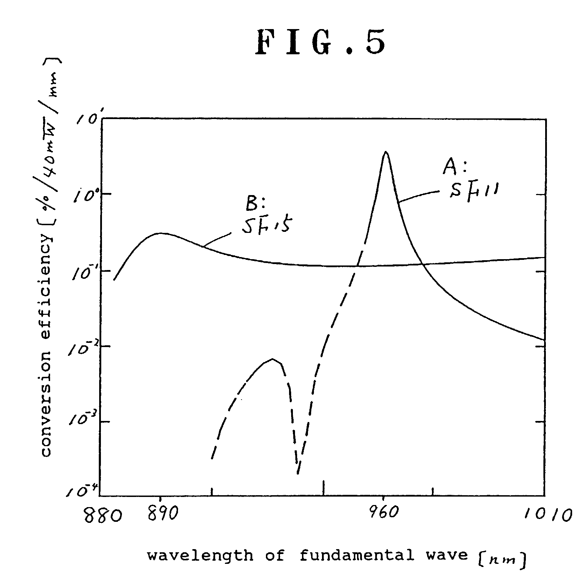

Fig. 5 shows a property of the conversion efficiency depending on the wavelength of the fundamental wave, in which the curve A shows a property of an SHG comprising a core made of DMNP and a clad made of SF11 glass, and the curve B shows a property of an SHG comprising a core made of DMNP and a clad made of SF15 glass. As seen from the graphs, the conversion efficiencies of the SHG surge and increase in accordance with the peaks. In these cases, the wavelength converting efficiencies (the power of an second harmonic wave / the power of the second harmonic wave) are obtained through equation 11 with parameter λ under conditions of the power of the fundamental wave being 40 mW and the SHG length being 1 mm.

As shown in Fig. 5 (curve A), high conversion efficiency is obtained when SF11 glass is selected for the clad material and 960 nm is selected for the wavelength of the fundamental wave. When this selection of SF11 glass for the clad and of 960 nm for the fundamental wave, such a wavelength corresponds to one of peaks in the curve of G(2β) as shown in Fig. 4. When SF15 glass is selected for the clad and 890 nm is selected for the fundamental wave as shown with curve $\underline{B}$ of Fig. 5, such a wavelength corresponds to one of peaks in the curve of G(2β) as shown in Fig. 4.

In this way, by scanning the wavelengths of the fundamental waves and selecting a pertinent one from the clad materials, a high conversion efficiency can be found out for the SHG, although the refractive index does change due to the refractive index dispersion of the wavelength of the fundamental wave entering the fiber comprising the core and clad.

Accordingly, it is useful to satisfy the above equation 1 by the selected combination of a core radius, a glass material for the clad and a nonlinear optical material for the core and, at the same time, to select parameters, i.e., a clad glass and a wavelength for the fundamental wave for generating the peaks of the curve of G(2β) for designing of an SHG with a high conversion efficiency.

## Claims

1. A fiber type optical wavelength converter (3) comprising an optical fiber including a core (10) made of a nonlinear optical crystal and a clad (20) surrounding the core, in which a fundamental wave having a wavelength λ entering and propagating in the direction of the center axis of the core is converted into a second harmonic wave having a half wavelength λ/2, wherein said core (10) and said clad (20) are made of a nonlinear optical material and an optical glass satisfying the following inequality respectively:

$$\left| (n_G^{2\omega})^2 - (N^{\omega})^2 \right| < 0.093(\lambda/a)^2 \tag{1}$$

where $n_G^{2\omega}$ represents a refractive index of said core to the second harmonic wave corresponding to a dielectric tensor effectively utilized in the conversion, $N^{\omega}$ represents an effective refractive index of the optical fiber, λ represents the wavelength of the fundamental wave and $\underline{a}$ represents the radius of said core in the cross-section in such a manner that the core radius satisfies inequality 1; and characterized in that:

the output power $P^{2\omega}$ of said second harmonic wave is defined by the following equation 11

$$P^{2\omega} = 4\pi^2 \omega^3 \mu_0 \varepsilon_0^2 d^2 C^2 L G(2\beta) F(2\beta) \tag{11}$$

where

ω denotes the angular frequency of the fundamental wave;

$\mu_0$ denotes the permeability of vacuum;

$\varepsilon_0$ denotes the dielectric constant of vacuum;

$\underline{d}$ denotes a constant of a nonlinear polarization tensor effectively utilized in the wavelength conversion;

$\underline{C}$ denotes a constant number based on the fundamental wave;

G(2β) denotes a factor influencing an interface reflection that the second harmonic wave undergoes at the boundary between the core and clad due to a refractive index difference therebetween which corresponds to a Fresnel coefficient of transmittance and is defined by the following equation 10

$$G(\kappa) = \text{Real}\left\{ -i \frac{\eta N_0(a\gamma) H_1^{(1)}(a\eta) - \zeta(N_1(a\gamma) H_0^{(1)}(a\eta)}{J_0(a\gamma) H_1^{(1)}(a\eta) - \eta J_1(a\gamma) H_0^{(1)}(a\eta)} \right\} \tag{10}$$

$$\Upsilon = (4\omega^2 \mu_0 \varepsilon_G^{2\omega} - \kappa^2)^{1/2}$$

$$\eta = (4\omega^2 \mu_0 \varepsilon_S^{2\omega} - \kappa^2)^{1/2}$$

where

$\varepsilon_G^{2\omega}$ denotes a dielectric constant of the core with respect to the second harmonic wave;

$\varepsilon_S^{2\omega}$ denotes a dielectric constant of the clad with respect to the second harmonic wave;

$N_0$ and $N_1$ denote the zeroth and the first Neumann functions respectively;

$J_1$ and $J_0$ denote the first and the zeroth Bessel functions of the first kind respectively; and

$H_1$ and $H_0$ denote the first and the zeroth deformation Hankel functions respectively;

$F(2\beta)$ denotes a factor influencing a so-called overlap integral between the distribution of a nonlinear polarization and an electric field;

$\beta$ denotes a propagation constant of the fundamental wave propagating in the fiber; and

$\underline{L}$ denotes the length of core crystal;

and in that said wavelength $\lambda$ is a selected wavelength of the fundamental wave corresponding to a value of the factor $G(2\beta)$ within the full width at half maximum of one peak of a curve of said factor $G(2\beta)$ including a plurality of peaks in a contour map prepared on the basis of the following equations 19 and 20

$$\zeta^2|_{K=2\beta} = (2k)^2((n_G^{2\omega})^2 - (N^\omega)^2) \tag{19}$$

$$\eta^2|_{K=2\beta} = (2k)^2((n_S^{2\omega})^2 - (N^\omega)^2) \tag{20}$$

in which the abscissa indicates an increasing ratio of the refractive index of the core with respect to the second harmonic wave from the effective refractive index of the optical fiber $(n_G^{2\omega})^2 - (N^\omega)^2$, and the ordinate indicates an increasing ratio of the refractive index of the clad with respect to the second harmonic wave from the effective refractive index of the optical fiber $(n_S^{2\omega})^2 - (N^\omega)^2$, the curves being plotted along the equivalent values of $G(2\beta)$ in the plane containing the two coordinate axes, such that the direction indicating the high value of $G(2\beta)$ corresponds to a vertical direction to such a plane.

2. A fiber type optical wavelength converter according to claim 1, wherein said effective refractive index of the fiber is the root of the following characteristic equation 4:

$$UJ_1(U)/J_0(U) = WK_1(W)/K_0(W) \tag{4}$$

$$U = k_0 a[(n_G^\omega)^2 - (N^\omega)^2]^{1/2}$$

$$W = k_0 a[(N^\omega)^2 - (n_S^\omega)^2]^{1/2}$$

where

$J_1$ and $J_0$ denote the first and the zeroth Bessel functions of the first kind respectively;

$K_1$ and $K_0$ denote the first and the zeroth deformation Hankel functions respectively;

$n_G^\omega$ represents the refractive index of the core with respect to the fundamental wave;

$n_S^\omega$ represents the refractive index of the clad with respect to the fundamental wave; and

$k_0$ denotes the propagation constant $2\pi/\lambda$ in vacuum.

3. A fiber type optical wavelength converter according to claim 1 or 2, wherein said constant number based on the fundamental wave $\underline{C}$ is approximated by the following formula 3:

$$C \underset{=}{\alpha} \frac{2(\mu_0/\varepsilon_0)^{1/2}W^2P^\omega}{\pi a^2 N^\omega (U^2 + W^2)} \tag{3}$$

where

$\underline{a}$ denotes the core radius;

$N^{\omega}$ denotes an effective refractive index in an $LP_{01}$ mode for propagating a fundamental wave with the propagation constant $\beta$ in the fiber;

$P^{\omega}$ denotes the power of the fundamental wave.

4. A fiber type optical wavelength converter according to claim 1, 2 or 3 wherein the angle of Cerenkov radiation $\theta$ is in the range satisfying the following inequality:-

$$\sin\theta < 3.8327/ak_G \qquad (16)$$

where $k_G$ represents a normalization frequency expressed by the following equation:

$$k_G = 4\pi n_G^{2\omega}/\lambda \qquad (15).$$

5. A fiber type optical wavelength converter according to any one of the preceding claims, wherein the wavelength $\lambda$ is a selected wavelength of the fundamental wave corresponding to a value of the factor $G(2\beta)$ adjacent one peak of said curve of said factor $G(2\beta)$.


**Patentansprüche**

1. Ein optischer Wellenlängen-Konverter (3) vom Fasertyp enthaltend eine optische Faser mit einem Kern (10), bestehend aus einem nichtlinearen optischen Kristall und einem den Kern umgebenden Mantel (20), in die eine Grundwelle, die mit einer Wellenlänge $\lambda$ eintritt und sich in Richtung der Zentralachse des Kerns fortpflanzt, in eine zweite harmonische Oberwelle einer halben Wellenlänge $\lambda/2$ umgewandelt wird, wobei der Kern (10) und der Mantel (20) aus einem nichtlinearen optischen Material und einem optischen Glas gemacht sind, die der folgenden Ungleichung genügen:

$$\left|(n_G^{2\omega})^2 - (N^{\omega})^2\right| < 0,093(\lambda/a)^2 \qquad (1)$$

wobei $n_G^{2\omega}$ ein Brechungsindex des Kerns für die zweite harmonische Oberwelle entsprechend einem dielektrischen, bei der Umwandlung effektiv benutzten Tensor darstellt, $N^{\omega}$ einen effektiven Brechungsindex der optischen Faser darstellt, $\lambda$ die Wellenlänge der Grundwelle und $\underline{a}$ den Radius des Kerns im Querschnitt in einer Weise darstellt, daß der Kernradius der Ungleichung 1 genügt; und dadurch gekennzeichnet, daß:

Die Ausgangsleistung $P^{2\omega}$ der zweiten harmonischen Oberwelle durch die folgende Gleichung 11 definiert ist:

$$P^{2\omega} = 4\pi^2\omega^3\mu_0\varepsilon_0^2 d^2 C^2 L G(2\beta)F(2\beta) \qquad (11)$$

dabei bedeuten:

$\omega$ die Winkelfrequenz der Grundwelle;

$\mu_0$ die Permeabilität des Vakuums;

$\varepsilon_0$ die Dielektrizitätskonstante des Vakuums;

$\underline{d}$ eine Konstante eines nichtlinearen Polarisierungstensors, der effektiv in der Wellenlängen-umwandlung benutzt wird;

$\underline{C}$ eine Konstante basierend auf der Grundwelle;

$G(2\beta)$ ein Faktor, der eine Schnittstellenreflexion beeinflußt, die die zweite harmonische Oberwelle an der Grenze zwischen dem Kern und dem Mantel erfährt aufgrund eines Brechungsindexunterschieds zwischen diesen beiden, der einem Fresnel-Durchlässigkeitskoeffizienten entspricht, der durch die folgende Gleichung 10 definiert ist:

$$G(K) = \text{Real} \left\{ -i \frac{\eta N_0(a\gamma) H_1^{(1)}(a\eta) - \zeta(N_1(a\gamma) H_0^{(1)}(a\eta)}{J_0(a\gamma) H_1^{(1)}(a\eta) - \eta J_1(a\gamma) H_0^{(1)}(a\eta)} \right\} \tag{10}$$

$$\gamma = (4\omega^2 \mu_0 \varepsilon_G^{2\omega} - K^2)^{1/2}$$

$$\eta = (4\omega^2 \mu_0 \varepsilon_S^{2\omega} - K^2)^{1/2}$$

dabei bezeichnen

$\varepsilon_G^{2\omega}$ eine dielektrische Konstante des Kerns gegenüber der zweiten harmonische Oberwelle;
$\varepsilon_S^{2\omega}$ eine dielektrische Konstante des Mantels gegenüber der zweiten harmonische Oberwelle;
$N_0$ und $N_1$ die 0-te bzw. die erste Neumann-Funktion;
$J_1$ und $J_0$ die erste bzw. die 0-te Bessel-Funktion der ersten Art; und
$H_1$ und $H_0$ die erste bzw. Die 0-te Deformations-Hankel-Funktion;
$F(2\beta)$ bezeichnet einen Faktor, der ein sogenanntes Überlappungs-Integral zwischen der Verteilung einer nichtlinearen Polarisierung und einem elektrischen Feld beeinflußt;
$\beta$ bezeichnet eine Fortpflanzungskonstante der Grundwelle, die sich in der Faser fortpflanzt; und
$\underline{L}$ bezeichnet die Länge des Kernkristalls; -

und somit ist die Wellenlänge $\lambda$ eine ausgewählte Wellenlänge der Grundwelle entsprechend einem Wert des Faktors $G(2\beta)$ innerhalb der vollen Breite bei halbem Maximum einer Spitze einer Kurve des genannten Faktors $G(2\beta)$ einschließlich einer Vielzahl von Spitzen in einer Konturabbildung, die auf der Grundlage der nachstehenden Gleichungen 19 und 20 errechnet wurde:

$$\zeta^2|_{K=2\beta} = (2k)^2((n_G^{2\omega})^2 - (N^\omega)^2) \tag{19}$$

$$\eta^2|_{K=2\beta} = (2k)^2((n_S^{2\omega})^2 - (N^\omega)^2) \tag{20}$$

in denen die Abszisse ein zunehmendes Verhältnis des Brechungsindex des Kerns gegenüber der zweiten harmonische Oberwelle vom effektiven Brechungsindex der optischen Faser $(n_G^{2\omega})^2 - (N^\omega)^2$, und die Ordinate ein zunehmendes Verhältnis des Brechungsindex des Mantels gegenüber der zweiten harmonische Oberwelle vom effektiven Brechungsindex der optischen Faser $(n_S^{2\omega})^2 - (N^\omega)^2$ bedeutet, wobei die Kurven entlang den äquivalenten Werten von $G(2\beta)$ in der die zwei Koordinatenachsen enthaltenden Ebene aufgetragen werden, so daß die Richtung, die den hohen Wert von $G(2\beta)$ anzeigt, einer senkrechten Richtung auf diese Ebene entspricht.

2. Ein optischer Wellenlängen-Konverter vom Fasertyp gemäß Anspruch 1, in dem der effektive Brechungsindex der Faser die Wurzel aus der nachstehenden kennzeichnenden Gleichung 4 ist:

$$UJ_1(U)/J_0(U) = WK_1(W)/K_0(W) \tag{4}$$

$$U = k_0 a[(n_G^\omega)^2 - (N^\omega)^2]^{1/2}$$

$$W = k_0 a[(N^\omega)^2 - (n_S^\omega)^2]^{1/2}$$

dabei bezeichnen

$J_1$ und $J_0$ die erste bzw. die 0-te Bessel-Funktion der ersten Art;
$K_1$ und $K_0$ die erste bzw. die 0-te Deformations-Hankel-Funktion;
$n_G{}^\omega$ den Brechungsindex des Kerns gegenüber der Grundwelle;
$n_S{}^\omega$ den Brechungsindex des Mantels gegenüber der Grundwelle; und
$k_0$ bezeichnet die Fortpflanzungskonstante $2\pi/\lambda$ im Vakuum.

3. Ein optischer Wellenlängen-Konverter vom Fasertyp gemäß Anspruch 1 oder 2, in dem die Konstante auf der Grundlage der Grundwelle $\underline{C}$ durch die nachstehende Formel 3 approximiert wird:

$$C \cong \frac{2(\mu_0/\varepsilon_0)^{1/2} W^2 P^\omega}{\pi a^2 N^\omega (U^2 + W^2)} \qquad (3)$$

dabei bezeichnen

$\underline{a}$ den Kernradius;
$N^\omega$ den effektiven Brechungsindex in einem $LP_{01}$ Modus zum Fortpflanzen einer Grundwelle mit der Fortpflanzungskonstanten $\beta$ in der Faser;
$P^\omega$ die Leistung der Grundwelle.

4. Ein optischer Wellenlängen-Konverter vom Fasertyp gemäß Anspruch 1, 2 oder 3, in dem der Winkel $\theta$ der Cerenkov-Strahlung in dem Bereich liegt, der der nachstehenden Ungleichung genügt:

$$\sin\theta < 3{,}8327/ak_G \qquad (16)$$

wobei $k_G$ eine Normalisierungsfrequenz darstellt, die durch die nachstehende Gleichung ausgedrückt wird:

$$k_G = 4\pi n_G{}^{2\omega}/\lambda \qquad (15).$$

5. Ein optischer Wellenlängen-Konverter vom Fasertyp gemäß einem beliebigen der vorstehenden Ansprüche, in dem die Wellenlänge $\lambda$ eine ausgewählte Wellenlänge der Grundwelle entsprechend einem Wert des Faktors G (2$\beta$) anliegend an eine Spitze der Kurve des Faktors G(2$\beta$) ist.

**Revendications**

1. Convertisseur optique de longueur d'onde (3) à fibre, comprenant une fibre optique contenant une âme (10) réalisée en un cristal optique non linéaire, et une gaine (20) qui entoure l'âme, et dans lequel une onde fondamentale de longueur $\lambda$ qui entre et se propage dans la direction de l'axe central de l'âme est convertie en une seconde onde harmonique de demi-longueur d'onde $\lambda/2$, l'âme (10) et la gaine (20) étant réalisées en une matière optique non linéaire, et en un verre optique respectivement conformes à l'inégalité suivante :

$$\left| (n_G{}^{2\omega})^2 - (N^\omega)^2 \right| < 0.093 \, (\lambda/a)^2 \qquad (1)$$

où

$n_G{}^{2\omega}$ représente un indice de réfraction de l'âme par rapport à la seconde onde harmonique correspondant à un tenseur diélectrique utilisé efficacement dans la conversion,
$N^\omega$ représente un indice de réfraction efficace de la fibre optique,
$\lambda$ représente la longueur d'onde de l'onde fondamentale, et
$\underline{a}$ représente le rayon de l'âme en section transversale, de manière à ce que le rayon de l'âme soit conforme à l'inégalité 1,

caractérisé en ce que :

la puissance de sortie $P^{2\omega}$ de la seconde onde harmonique est définie par l'équation 11 suivante :

$$P^{2\omega} = 4\pi^2\omega^3\mu_0\varepsilon_0^2 d^2 C^2 LG(2\beta)F(2\beta) \tag{11}$$

où :

$\omega$     indique la fréquence angulaire de l'onde fondamentale,

$\mu_0$     indique la perméabilité du vide,

$\varepsilon_0$     indique la constante diélectrique du vide,

$\underline{d}$     indique une constante de tenseur de polarisation non linéaire utilisé efficacement dans la conversion de longueur d'onde,

$\underline{C}$     indique un numéro de constante basé sur l'onde fondamentale,

$G(2\beta)$ indique un facteur qui influence une réflexion d'interface que subit la deuxième onde harmonique à la frontière entre l'âme et la gaine du fait d'une différence d'indice de réfraction entre ces éléments qui correspond à un coefficient de transmission de Fresnel et est définie par l'équation 10 suivante :

$$G(\kappa) = \mathrm{Real}\left\{-i\,\frac{\eta N_0(a\gamma)H_1^{(1)}(a\eta) - \zeta(N_1(a\gamma)H_0^{(1)}(a\eta)}{J_0(a\gamma)H_1^{(1)}(a\eta) - \eta J_1(a\gamma)H_0^{(1)}(a\eta)}\right\} \tag{10}$$

$$\Upsilon = (4\omega^2\mu_0\varepsilon_G^{2\omega} - \kappa^2)^{1/2}$$

$$\eta = (4\omega^2\mu_0\varepsilon_S^{2\omega} - \kappa^2)^{1/2}$$

où

$\varepsilon_G^{2\omega}$     indique une constante diélectrique de l'âme par rapport à la seconde onde harmonique,

$\varepsilon_S^{2\omega}$     indique une constante diélectrique de la gaine par rapport à la seconde onde harmonique,

$N_0$ et $N_1$     indiquent respectivement la fonction zéro et la première fonction de Neumann,

$J_0$ et $J_1$     indiquent respectivement la fonction zéro et la première fonction de Bessel du premier type, et

$H_1$ et $H_0$     indiquent respectivement la première fonction et la fonction zéro de déformation de Hankel,

$F(2\beta)$     indique un facteur qui influence ce qui est appelé une intégrale de recouvrement entre la distribution d'une polarisation non linéaire et un champ électrique,

$\beta$     indique une constante de propagation de l'onde fondamentale dans la fibre, et

$\underline{L}$     indique la longueur du cristal de l'âme,

et en ce que ladite longueur d'onde $\lambda$ est une longueur d'onde choisie de l'onde fondamentale, correspondant à une valeur du facteur $G(2\beta)$ à l'intérieur de la largeur complète à la moitié du maximum d'un sommet de courbe dudit facteur $G(2\beta)$ comprenant une pluralité de sommets dans un ensemble de contours obtenus à partir des équations 19 et 20 suivantes :

$$\zeta^2|_{K=2\beta} = (2k)^2((n_G^{2\omega})^2 - (N^\omega)^2) \tag{19}$$

$$\eta^2|_{K=2\beta} = (2k)^2((n_S^{2\omega})^2 - (N^\omega)^2) \tag{20}$$

dans lesquelles l'abscisse indique un taux croissant de l'indice de réfraction de l'âme par rapport à la seconde onde harmonique à partir de l'indice de réfraction efficace de la fibre optique $(n_G^{2\omega}) - (N^\omega)^2$, et l'ordonnée indique un taux croissant de l'indice de réfraction de la gaine par rapport à la seconde onde harmonique à partir de l'indice de réfraction efficace de la fibre optique $(n_S^{2\omega}) - (N^\omega)^2$, les courbes étant tracées suivant les valeurs équivalentes de $G(2\beta)$ dans le plan contenant les deux axes de coordonnées, de manière à ce que la direction indiquant la valeur élevée de $G(2\beta)$ corresponde à une direction verticale par rapport à ce plan.

2. Convertisseur optique de longueur d'onde à fibre selon la revendication 1, dans lequel l'index de réfraction efficace de la fibre est la racine de l'équation caractéristique 4 suivante :

$$UJ_1(U)/J_0(U) = WK_1(W)/K_0(W) \qquad (4)$$

$$U = k_0 a[(n_G^\omega)^2 - (N^\omega)^2]^{1/2}$$

$$W = k_0 a[(N^\omega)^2 - (n_S^\omega)^2]^{1/2}$$

où

$J_1$ et $J_0$     indiquent respectivement la première et la fonction zéro de Bessel du premier type,

$K_1$ et $K_0$     indiquent respectivement la première fonction et la fonction zéro de déformation de Hankel,

$n_G^\omega$     représente l'indice de réfraction de l'âme par rapport à l'onde fondamentale,

$n_S^\omega$     représente l'indice de réfraction de la gaine par rapport à l'onde fondamentale, et

$k_0$     indique la constante de propagation $2\pi/\lambda$ dans le vide.

3. Convertisseur optique de longueur d'onde à fibre selon la revendication 1 ou 2, dans lequel le numéro de constante basé sur l'onde fondamentale $\underline{C}$ est évalué par la formule 3 suivante :

$$C \underline{\,\alpha\,} \frac{2(\mu_0/\varepsilon_0)^{1/2} W^2 P^\omega}{\pi a^2 N^\omega (U^2 + W^2)} \qquad (3)$$

où

$\underline{a}$     indique le rayon de l'âme,

$N^\omega$     indique un indice de réfraction utile en mode $LP_{01}$ pour la propagation d'une onde fondamentale à la constante de propagation $\beta$ dans la fibre,

$P^\omega$     indique la puissance de l'onde fondamentale.

4. Convertisseur optique de longueur d'onde à fibre selon la revendication 1, 2 ou 3, dans lequel le rayonnement d'angle de Cerenkov $\theta$ se situe dans une gamme conforme à l'inégalité suivante :

$$\sin\theta < 3.8327/ak_G \qquad (16)$$

où

$k_G$ représente une fréquence de normalisation exprimée par l'équation suivante :

$$k_G = 4\pi n_G^{2\omega}/\lambda \qquad (15).$$

5. Convertisseur optique de longueur d'onde à fibre selon l'une quelconque des revendications précédentes, dans lequel la longueur d'onde $\lambda$ est une longueur d'onde choisie de l'onde fondamentale correspondant à une valeur du facteur $G(2\beta)$ au voisinage d'un sommet de la courbe dudit facteur $G(2\beta)$.

# Fig. 1

FUNDAMENTAL WAVE

3

10  20

SECOND HARMONICS

# Fig. 2

$P^{2\omega}$

3.8327
$(1.22\pi)$

$a\ ka\ \sin\theta$

# Fig. 3

# F I G . 4

# F I G . 5